# EUROPEAN PATENT SPECIFICATION

(11) **EP 2 297 907 B1**
(45) Date of publication and mention of the grant of the patent: **09.04.2014**
(21) Application number: 09793702.3
(22) Date of filing: 06.07.2009
(51) Int. Cl.: H04L 5/00, H04L 1/00

(54) **Parallel packet transmission**
Parallele Paketübertragung
Transmission de paquets en parallèle

(30) Priority: 07.07.2008 AU 2008903478
(43) Date of publication of application: 23.03.2011
(73) Proprietor: Commonwealth Scientific and Industrial Research Organisation, Campbell, Australian Capital Territory 2612 (AU)
(72) Inventor: HUANG, Xiaojing, North Ryde NSW 2113 (AU); GUO, Yingjie, Jay, Epping NSW 2121 (AU)
(74) Representative: Piotrowicz, Pawel Jan Andrzej
(86) International application number: PCT/AU2009/000874
(87) International publication number: WO 2010/003176

(56) References cited:
- US-A1- 2006 209 813
- US-A1- 2006 250 944
- US-A1- 2007 242 639
- US-B1- 7 274 652
- BAUCH G ED - INSTITUTE OF ELECTRICAL AND ELECTRONICS ENGINEERS: "Space-time block codes versus space-frequency block codes", VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003; [IEEE VEHICULAR TECHNOLGY CONFERENCE], NEW YORK, NY : IEEE, US, vol. 1, 22 April 2003 (2003-04-22), pages 567-571, XP010862071, DOI: 10.1109/VETECS.2003.1207606 ISBN: 978-0-7803-7757-8
- XIAOJING HUANG ET AL: "Parallel Packet Transmission Based on OFDM", WIRELESS COMMUNICATIONS AND NETWORKING CONFERENCE, 2009. WCNC 2009. IEEE, IEEE, PISCATAWAY, NJ, USA, 5 April 2009 (2009-04-05), pages 1-6, XP031454375, ISBN: 978-1-4244-2947-9

## Description

### Field of the Invention

The present invention relates generally to digital communication and, in particular, to orthogonal frequency division multiplexing schemes for packet communication.

### Background

Orthogonal frequency division multiplexing (OFDM) is a scheme for communicating digital data over a channel. The OFDM scheme converts a frequency-selective multipath fading channel into a number of parallel sub-channels with only flat fading, each with a corresponding subcarrier. Since a flat fading channel offers higher data transmission throughput, the overall system throughput is improved. OFDM effectively mitigates the intersymbol interference (ISI) caused by channel time spread and only utilises simple frequency domain channel equalization. Due to these advantages, OFDM has been widely used in wireless personal, local, and metropolitan area networks (WPANs, WLANs, and WMANs) and digital audio and video broadcasting services (DAB/DVB). OFDM is also the strongest candidate scheme for future generation wireless mobile communication systems. G. Bauch: "Space-time block codes versus space-frequency block codes", Proc. of IEEE Vehicular Technology Conference (VTC), Jeju, Korea, April 22-25, 2003, pages 567 to 571 (2003) describes Space-Time Block Codes (STBC) and Space-Frequency Block Codes (SFBC) for use in multiple-input multiple-output (MIMO) systems. The symbols on STBC and SFBC are from one data packet and the data packets are transmitted in series.

To improve an OFDM system's performance after using diversity techniques in frequency-selective multipath fading channels, channel coding has conventionally been used before modulating the data symbols to be transmitted onto the OFDM subcarriers. Recently, linear precoding for OFDM has been introduced to improve the frequency diversity across subcarriers. Though there are some variations in performing precoding, OFDM systems with precoding share the same principle of dividing data symbols into groups and applying a unitary matrix to each data group to obtain a linear combination of the data symbols. After subcarrier modulation, the original data symbols are therefore spread across the transmission frequency band. Thus, if a subcarrier experiences a deep fade after transmitting over a frequency-selective multipath fading channel, the data symbols can be still recovered from other non-faded subcarriers, so that the system performance in terms of bit error rate (BER) is improved.

Given the channel diversity order, i.e. the number of uncorrelated signal paths that exist between a transmitter and a receiver, and the precoding data group size, the performance of a precoded OFDM system is predominantly determined by the equalization/detection method. Maximum-likelihood (ML) detection can achieve the maximum BER reduction for the precoded OFDM if the precoding symbol group size is larger than or equal to the channel diversity order. Since ML detection is highly computationally complex, especially when the symbol group size is large, linear equalization, such as minimum mean square error (MMSE) equalization or zero-forcing (ZF) equalization, followed by a hard decision, is preferable in practice, but with some performance degradation relative to precoded ML detection.

However, these techniques are aimed at improving the average BER of the data transmission, which may not necessarily improve the system throughput in terms of packets. In conventional OFDM data communication, packets are transmitted in series, i.e., consecutive data symbols representing the bits in a packet are modulated onto different OFDM subcarriers, so each packet is distributed across multiple subcarriers in a single OFDM symbol. This can cause errors in a subcarrier temporarily affected by fading to affect multiple successive packets. In other words, a lower average bit error rate does not necessarily mean a higher system throughput, because a packet has to be discarded at the receiver and retransmitted whether it has one or many erroneous bits.

### Summary

According to a first aspect of the present disclosure, there is provided a modulation method, comprising: dividing a series of data bits into a plurality of contiguous blocks; composing each said block into a corresponding parallel packet; mapping one or more bits from each said parallel packet into a corresponding data symbol; and modulating said data symbols onto respective subcarriers of an OFDM symbol such that data symbols from the same packet are modulated onto the same subcarrier.

According to a second aspect of the present disclosure, there is provided a modulation method, comprising: dividing a series of data bits into a plurality of contiguous blocks; composing a each said block into a corresponding parallel packet; mapping one or more bits from each said parallel packet into a corresponding data symbol; modulating said data symbols onto respective subcarriers of an OFDM symbol; mapping one or more further bits from each said parallel packet into a further corresponding data symbol; and modulating said further data symbols onto respective subcarriers of a further OFDM symbol such that data symbols from the same packet are modulated onto the same subcarrier.

According to another aspect of the present disclosure, there is provided a system comprising devices adapted to implement the aforementioned modulation and demodulation methods. Disclosed are arrangements for transmitting packets in parallel on separate OFDM subcarriers. For an OFDM-based system, some subcarriers may be of high quality at any particular point in time, whereas others might be poor. Under the disclosed arrangements, high quality subcarriers will be fully utilized whereas the subcarriers in deep fades are effectively ignored. By maximising the utilisation of high quality subcarriers, the overall system throughput can be improved without using conventional diversity techniques such as precoding.

In addition, the modulation scheme for a subcarrier is varied depending on the corresponding sub-channel state information. More bits may thereby be transmitted over high quality sub-channels, further improving the throughput.
The disclosed arrangements can be applied to both point-to-point communication systems and multi-user communication systems with either a single transmit/receive antenna or multiple transmit/receive antennas (i.e., antenna arrays).

### Brief Description of the Drawings

A number of embodiments will now be described with reference to the drawings, in which:
Fig. 1 illustrates a data communication system within which a first embodiment of the invention may be practised; Fig. 2 illustrates the source node of Fig. 1 in more detail;
Fig. 3 illustrates the destination node of Fig. 1 in more detail;
Fig. 4 illustrates the forward link transmitter of Fig. 2 in more detail;
Fig. 5a illustrates the process of buffering and packet composing with an exemplary N value of 4 carried out by the buffering and packet composing module of Fig. 4; Fig. 5b illustrates the process of mapping of packets to symbols and modulation of symbols to OFDM symbols with the exemplary N value of 4 carried out by the data symbol mapping and OFDM modulation modules of Fig. 4;
Fig. 5b illustrates the process of mapping of packets to symbols and modulation of symbols to OFDM symbols with the exemplary N value of 4 carried out by the data symbol mapping and OFDM modulation modules of Fig. 4;
Fig. 6 illustrates the OFDM modulation module of Fig. 4 in more detail;
Fig. 7 illustrates the forward link receiver of Fig. 3 in more detail;
Fig. 8 illustrates the OFDM demodulation module of Fig. 7 in more detail;
Fig. 9 illustrates the process of buffering and packet decomposing with an exemplary N value of 4 carried out by the buffering and packet decomposing module of Fig. 7;
Fig. 10 illustrates an OFDMA downlink transmitter according to a second embodiment;
Fig. 11 illustrates an OFDMA downlink receiver according to the second embodiment;
Fig. 12 illustrates an OFDM MIMO transmitter according to a third embodiment;
Fig. 13 illustrates an OFDM MIMO receiver according to the third embodiment; and
Fig. 14 is a graph showing normalized throughput in bits/second/Hz under different simulated communication schemes.

### Detailed Description including Best Mode

Where reference is made in any one or more of the accompanying drawings to steps and/or features, which have the same reference numerals, those steps and/or features have for the purposes of this description the same function(s) or operation(s), unless the contrary intention appears.

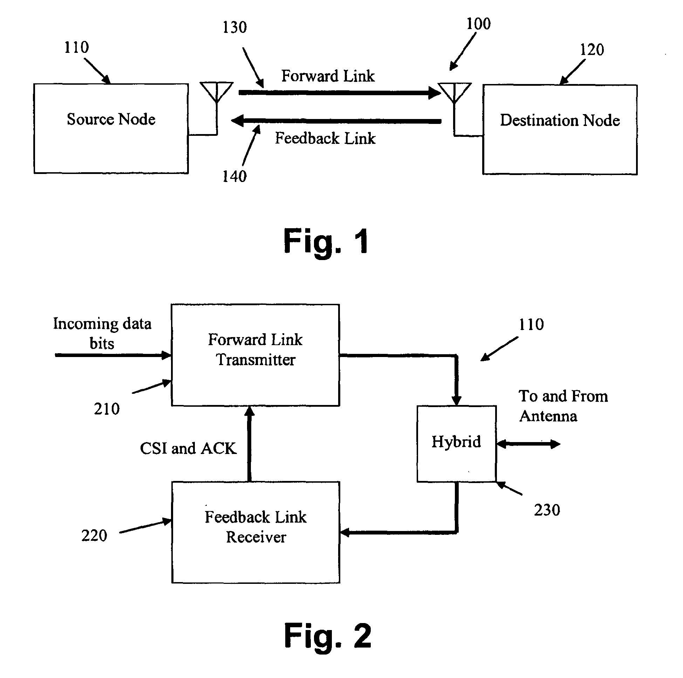

Fig. 1 illustrates a data communication system 100 within which a first embodiment of the invention may be practised. The system 100 includes two communicating nodes: the source node 110 and the destination node 120. The source node 110 transmits data to the destination node 120 via a forward link 130, and the destination node 120 provides channel state information (CSI) to the source node 110 and acknowledges the received data packets via a feedback link 140. Both the source and the destination nodes are equipped with single-element antennas.

Fig. 2 illustrates the source node 110 of Fig. 1 in more detail. The source node 110 comprises a forward link transmitter 210 which encodes and composes the incoming data bits to form data packets and transmits the data packets; a feedback link receiver 220 which receives the CSI and acknowledgement (ACK) information from the destination node 120; and a hybrid 230 which switches the signal path between the forward and feedback links. Fig. 2 shows only the baseband components of the source node 110; the RF components are not shown.

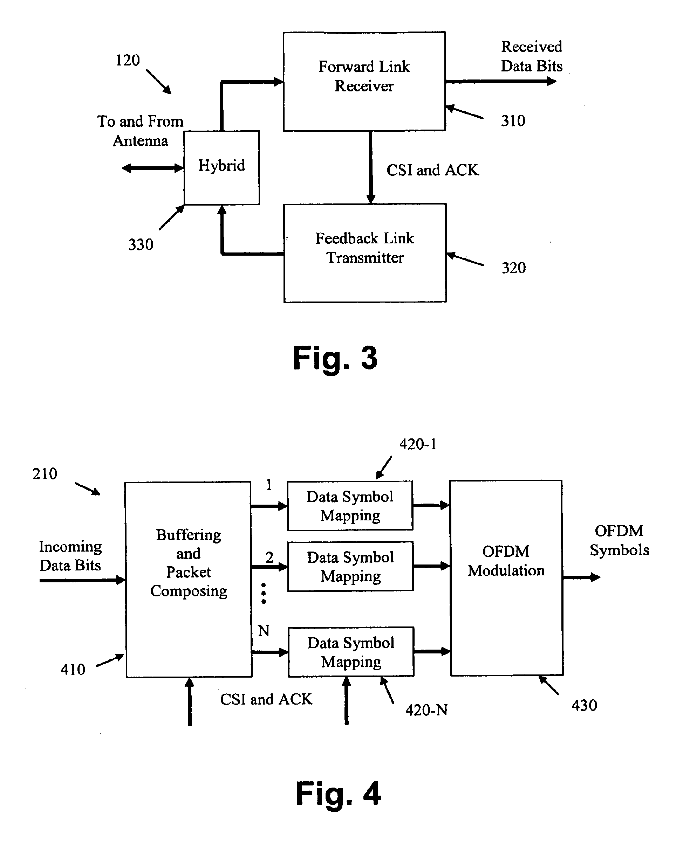

Fig. 3 illustrates the destination node 120 of Fig. 1 in more detail. The destination node 120 comprises a forward link receiver 310 which receives the transmitted data packets, decomposes and decodes data bits, and determines CSI and ACK information; a feedback link transmitter 320 which sends the CSI and ACK information back to the source node 110; and a hybrid 330 which switches the signal path between the forward and feedback links.

Fig. 4 illustrates the forward link transmitter 210 in more detail. The forward link transmitter 210 comprises a buffering and packet composing module 410, a number (N) of data symbol mapping modules 420-1 to 420-N, and an OFDM modulation module 430. The buffering and packet composing module 410 stores the previously transmitted data bits, composes the data bits which were not received correctly (based on the ACK information) together with the new incoming data bits into packets, and performs appropriate data encoding according to the CSI. This encoding is channel coding such as block codes or convolutional codes. Each data symbol mapping module 420-i maps packets into data symbols according to the modulation scheme for the corresponding subcarrier. As shown in Fig. 4, the symbol mapping is controlled by the CSI for each subcarrier, such that if a subcarrier has higher SNR then higher level modulation is used, and if a subcarrier has lower SNR then lower level modulation is used. For example, the modulation scheme is 4^{k}-ary quadrature amplitude modulation (QAM), where k is determined by the CSI, which is the signal-to-noise ratio on a subcarrier at the receiver. The number of symbols per packet is a predetermined constant, Nₛ, for all subcarriers. The OFDM modulation module 430 modulates the data symbols onto respective subcarriers. Data symbols from one packet are modulated onto the same subcarrier. Since the buffering and packet composing module 410 generates N parallel packets at a time, each of which is mapped to Nₛ data symbols by a corresponding data symbol mapping module 420-i, there are N subcarriers in an OFDM symbol, and Nₛ sequential OFDM symbols are needed to represent the N parallel data packets.

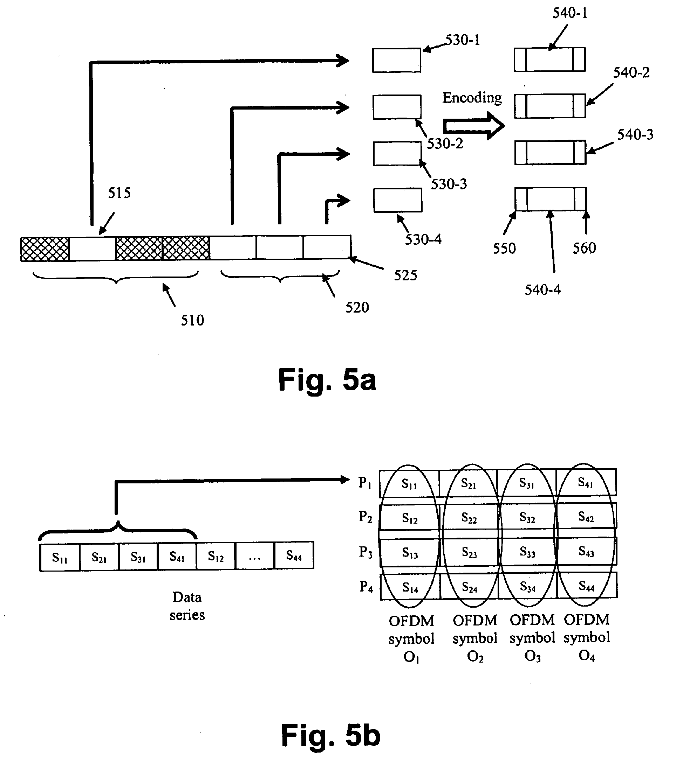

Fig. 5a illustrates the process of buffering and packet composing carried out by the buffering and packet composing module 410, with an exemplary N value of 4. The new incoming data bits 520 are divided into blocks, e.g. 525, as the buffered data bits 510 have already been. The number of data bits in a block is determined by the module 410 such that the number of symbols in every packet is equal to Nₛ. The number of bits per symbol for each of the N subcarriers is dependent on the modulation scheme and the channel coding rate for the respective subcarrier. For example, if the coding rate (the ratio of the number of bits before encoding to the number of bits after encoding) is R and the level of modulation is M=2^{K}, the number of bits per symbol is RK. In the illustrated example, the second data block 515 in the buffered data bits 510 was not received correctly, as indicated by the ACK information, and has to be re-transmitted. Firstly, the data block 515 and three data blocks from the incoming data bits 520 are selected to be the four data blocks 530-1 to 530-4 for encoding and packet composing. After encoding, four data packets, 540-1 to 540-4, are composed from the four blocks 530-1 to 530-4, such that the number of data symbols in each packet is equal to Nₛ. In addition to the block of data bits to be transmitted, each packet, e.g. 540-4, includes a header section, e.g. 550, and a frame check sum (FCS) suffix, e.g. 560. The header section 550 contains information such as the packet sequential number, the coding rate, the number of data bits in the packet, and the level of data symbol modulation, e.g. 16-point QAM. The FCS, which for example comprises cyclical redundancy check (CRC) bits, is appended to the packet so that the forward link receiver 310 can determine if the packet is received correctly or not.

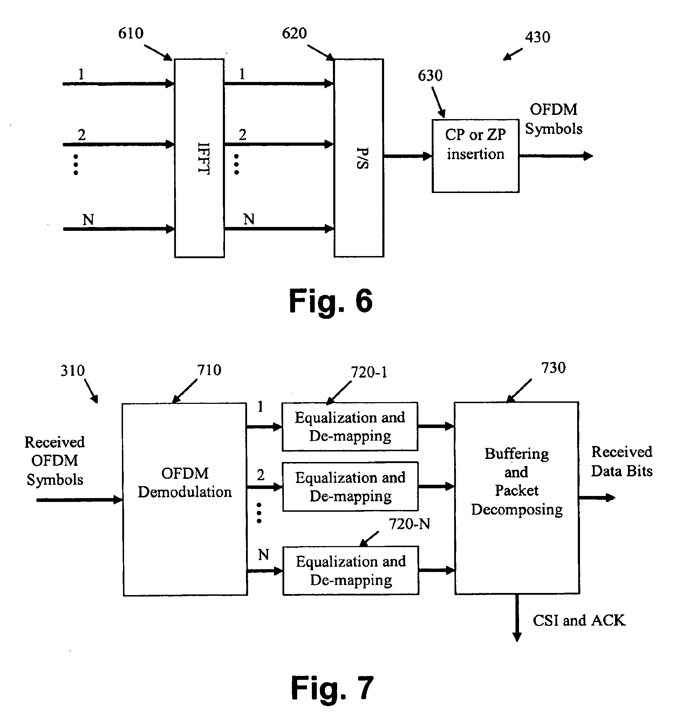

The OFDM modulation module 430 is shown in more detail in Fig. 6. The inverse fast Fourier transform (IFFT) module 610, performs an inverse fast Fourier transform operation on the N parallel data symbols which come from the N data packets respectively. After the IFFT module 610, the parallel-to-serial (P/S) converter 620 outputs the N time-domain samples of a single OFDM symbol in series. The cyclic prefix (CP) or zero padding (ZP) insertion module 630 then performs CP insertion or zero padded suffix appending to the OFDM symbol. The result is a series of Nₛ OFDM symbols that represent the N parallel data packets.

Fig. 5b illustrates the process of composing packets, mapping packets to symbols and modulating symbols to OFDM symbols with the exemplary N value of 4 carried out by the data symbol mapping modules 420-i and the OFDM modulation module 430. In Fig. 5b, the data series is divided into 4 parallel packets Pⱼ. There are four symbols Sᵢⱼ per packet (i.e. Nₛ = 4), where the bits of packet Pⱼ are mapped to symbols S₁ⱼ to S₄ⱼ. The symbols Sᵢ₁ to Sᵢ₄ are modulated to OFDM symbol O;, and the OFDM symbols O₁ to O₄ are transmitted in series.

The forward link receiver 310 is shown in more detail in Fig. 7. The forward link receiver 310 comprises an OFDM demodulation module 710, N equalization and de-mapping modules 720-1 to 720-N, and a buffering and packet decomposing module 730. The OFDM demodulation module 710 converts the received OFDM symbols into the frequency domain and obtains the received data symbols modulated onto each subcarrier. Each equalization and de-mapping module 720-i compensates for the effect of flat fading on the corresponding subcarrier, and de-maps the equalized received data symbols into encoded data bits. The modulation scheme for subcarrier i is used by the corresponding equalization and de-mapping module 720-i to de-map the data symbols into bits. Each transmitted packet is de-mapped from symbols modulated on a single subcarrier. The buffering and packet decomposing module 730 checks if each packet is received correctly, decodes the received data packets to obtain the received data bits, and buffers the received data bits. The CSI for each subcarrier, which is preferably the signal-to-noise ratio at the subcarrier, is also determined by the buffering and packet decomposing module 730, either using predetermined training sequences, or blindly, using conventional methods. If a re-transmitted data block is received, it will be buffered in the correct location among the buffered data bits according to the sequential number of the corresponding packet.

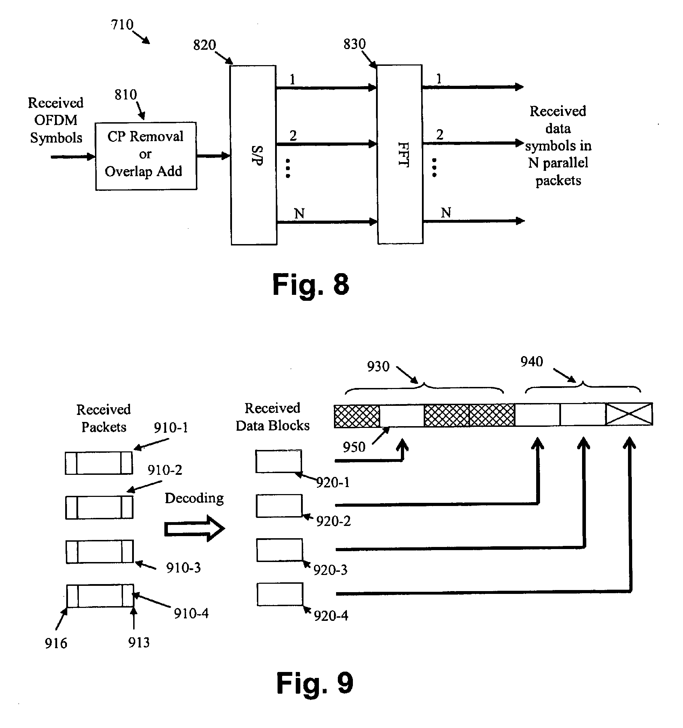

The OFDM demodulation module 710 is shown in more detail in Fig. 8. The OFDM demodulation module 710 firstly removes, via module 810, the CP from (if a CP was inserted in the transmitted OFDM symbol by the module 630), or performs an overlap add operation on (if a ZP was appended to the transmitted OFDM symbol by the module 630), the received OFDM symbol. The Fast Fourier Transform (FFT) module 830 then performs an FFT, after serial-to-parallel (S/P) conversion by the S/P module 820, to obtain the N received data symbols making up the received OFDM symbol. After Nₛ sequential received OFDM symbols have been demodulated, all the data symbols in the N parallel transmitted data packets are available.

Fig. 9 illustrates the process of buffering and packet decomposing with an exemplary N value of 4 as carried out by the buffering and packet decomposing module 730. It is assumed that among the buffered data bits 930, the second data block 950 was not correctly received in a previous parallel packet transmission. Firstly, the four received data packets 910-1 to 910-4 are decoded and decomposed into data blocks 920-1 to 920-4. The first data block 920-1, which is the re-transmitted data block 950, is then buffered at the correct location among the buffered data bits 930. The other three data blocks 920-2 to 920-4 are the newly received data blocks which are buffered in order among the received data bits 940 according to their respective packet sequential numbers decoded from the packet header, e.g. 916. The packet FCS, e.g. 913, is used to determine if each packet is received correctly, and the ACK information is generated consequently. For example, the data block 920-4 was incorrectly received, so the ACK information will indicate to the forward link transmitter 210 to re-transmit the corresponding packet 910-4.

The feedback link transmitter 320 and the feedback link receiver 220 are the same as the transmitter 210 and the receiver 310 for the forward link described above, but the CSI and ACK information are embedded in the data packets sent via the feedback link.

Though the first embodiment is used in a point-to-point communication system of Fig. 1, the disclosed arrangements can be also used for multi-user communication with the orthogonal frequency division multiple access (OFDMA) scheme.

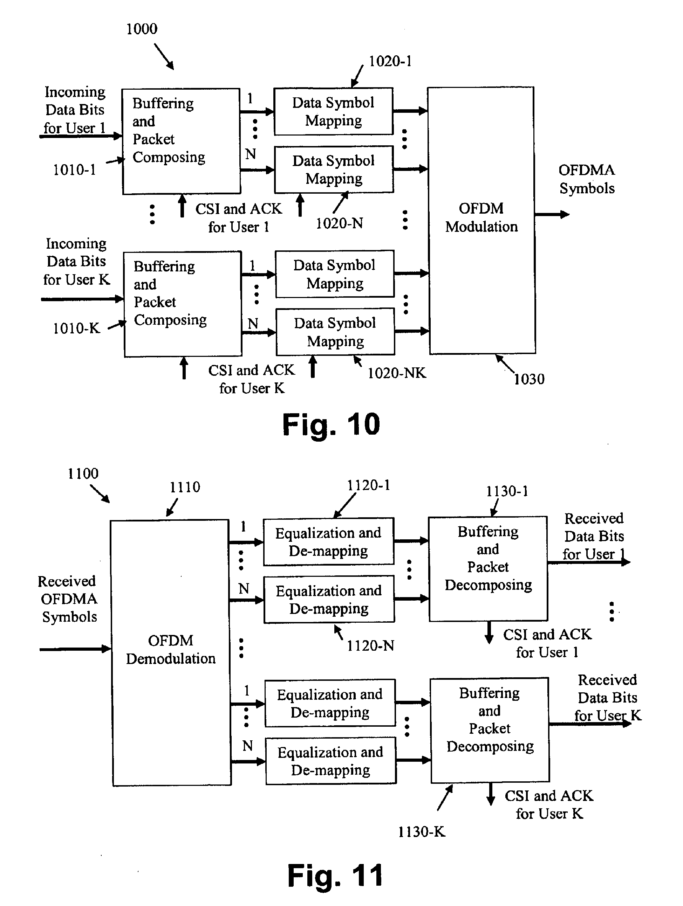

Figs. 10 and 11 illustrate an OFDMA downlink transmitter 1000 and receiver 1100 respectively according to a second embodiment. In the downlink transmitter 1000, the data bits for K users are input into K buffering and packet composing modules 1010-1 to 1010-K, each of which produces N parallel packets dependent on the corresponding CSI and ACK information, like the buffering and packet composing module 410. After data symbol mapping by the NK data symbol mapping modules 1020-1 to 1020-NK, analogous to the data symbol mapping modules 420-i, there are a total of NK packets entering the OFDM modulation module 1030 in parallel. The OFDM modulation module 1030, in similar fashion to the OFDM modulation module 430, performs an IFFT of size NK to generate the time samples of an OFDMA symbol. A series of Nₛ such OFDMA symbols represents the NK parallel packets, where Nₛ is the predetermined constant number of symbols per packet.

In the OFDMA receiver 1100 shown in Fig. 11, the received OFDMA symbols are demodulated by the OFDM demodulation module 1110 with an NK-point FFT to produce the received data symbols in NK parallel data packets, in similar fashion to the OFDM demodulation module 710. Each group of N of these symbols is passed to N equalization and de-mapping modules 1120-i, each similar to an equalization and de-mapping module 720-i, for equalization and de-mapping to packets. The resulting packets are buffered, decoded, and decomposed to data bits for each user by a buffering and packet decomposition module 1130-i, similar to the buffering and packet decomposition module 730. The CSI and ACK information is also generated for the N subcarriers allocated to each user by the corresponding a buffering and packet decomposition module 1130-i.

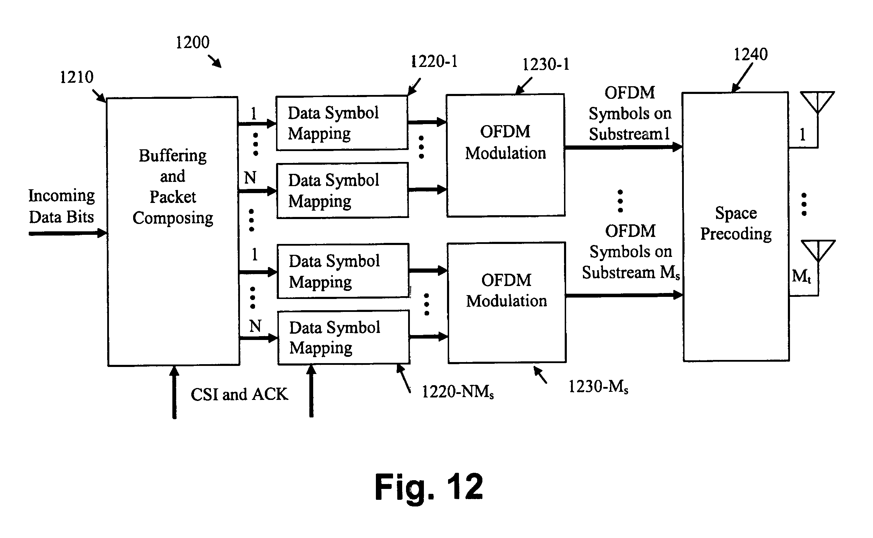

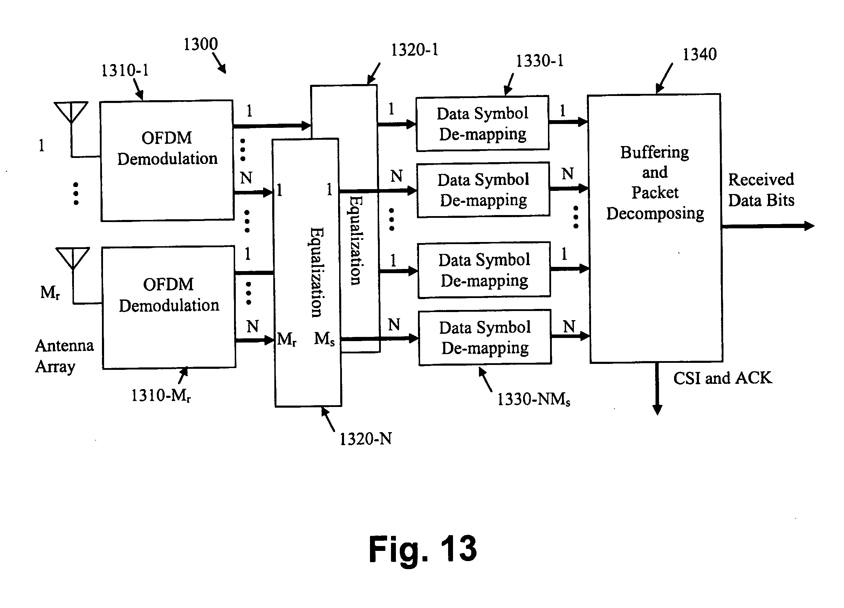

The disclosed arrangements can also be used in an OFDM-based multiple-input multiple-output (MIMO) system. Figs. 12 and 13 illustrate an OFDM MIMO transmitter 1200 and receiver 1300 respectively according to a third embodiment. The MIMO transmitter 1200 uses Mₛ sub-streams as shown in Fig. 12. The buffering and packet composing module 1210, analogous to the buffering and packet composing module 410; produces NMₛ parallel packets from the incoming data bits. Groups of N packets from the NMₛ parallel packets are used to form each sub-stream after data symbol mapping by data symbol mapping modules 1220-i, analogous to the data symbol mapping modules 420-i, and OFDM modulation using N-point IFFTs by the OFDM modulation modules 1230-1 to 1230-Mₛ, each analogous to the OFDM modulation module 430. The time-domain signals from the Mₛ sub-streams are finally combined and distributed into Mₜ transmit antennas via a space precoding module 1240 in the conventional fashion.

In the MIMO OFDM receiver 1300 illustrated in Fig. 13, there are Mᵣ antennas used to receive the transmitted signals and Mᵣ OFDM demodulation modules 1310-1 to 1310-Mᵣ, each analogous to the OFDM demodulation module 710, to produce the NMᵣ received data symbol streams representing NMᵣ parallel packets. These symbol streams are divided into Mᵣ groups. A set of Mᵣ symbols, one from each group, is equalized by each equalization module 1320-i according to conventional MIMO spatial multiplexing to produce a set of Mₛ equalized data symbols. N equalized data symbols, one from each equalization module 1320-i, form one of the Mₛ sub-streams. The data symbol streams are de-mapped by NMₛ de-mapping modules 1330-i to produce the received data bits after packet decomposing by the buffering and packet decomposing module 1340, analogous to the buffering and packet decomposing module 730. CSI and ACK information for the NMₛ subcarriers are generated by the buffering and packet decomposing module 1340 and fed back to the transmitter 1200 via a feedback link.

Each module of Figs. 1 to 13 is preferably implemented in dedicated hardware such as one or more integrated circuits performing the functions or sub-functions of the respective modules. Such dedicated hardware may include digital signal processors or one or more microprocessors and associated memories.

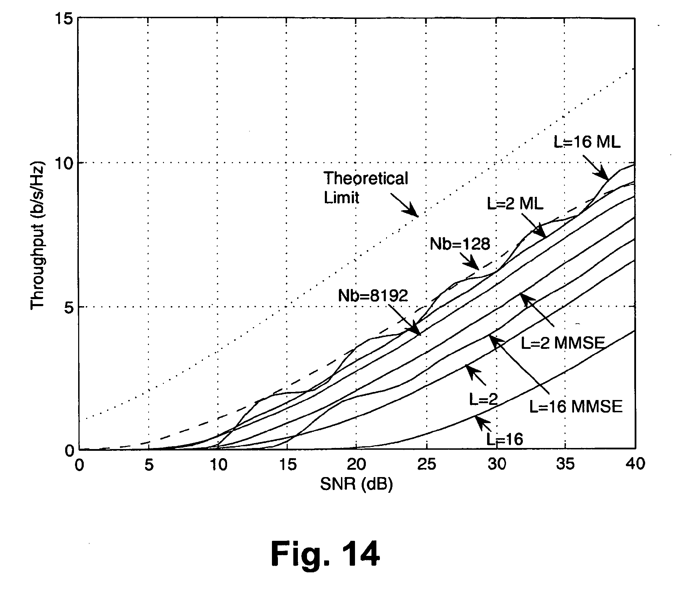

To demonstrate the system performance of the first embodiment in comparison with that of conventional serial packet transmission, the normalized throughput in bits/second/Hz under different simulated system configurations is shown in Fig. 14. In the simulations, the IFFT/FFT size is N = 64 and the packet size (in data bits) to be transmitted by conventional serial transmission is N_{b} = 8192. The length of the packets 540-i in Fig. 5 is N_{b} divided by N, i.e. 128, plus the bits for header and FCS. That is, the packet length for parallel packet transmission is shorter than that for serial packet transmission provided that the number of OFDM symbols is the same and the overhead for header and FCS is ignored. The channel diversity order is first L = 2 and then L = 16. The data symbol mapping for each subcarrier for all schemes uses 4^{k}-ary QAM, where k is determined by the CSI, being the signal-to-noise ratio on the subcarrier at the receiver.

The two lowest lines marked "L = 16" and "L = 2" are the performance curves of a conventional serial system without precoding. The solid line marked "Nb = 8192" indicates the throughput curve using the first embodiment but with the same packet size as the one used in conventional serial packet transmission. Fig. 14 shows that throughput using the first embodiment is better than that of the precoded OFDM with MMSE equalization under both simulated diversity orders. The throughput of precoded OFDM using ML detection is higher than that of the first embodiment under both diversity orders, but this scheme is highly impractical due to the computational complexity. The complexity of ML is exponentially proportional to the precoding size, while the complexity of MMSE is linearly proportional to the precoding size. The system according to the first embodiment does not need any precoding, and is therefore less complex than both. The dotted "theoretical limit" line is calculated using the Shannon capacity limit formula C=log₂(1+SNR). With a shorter packet size of N_{b}=128 for the parallel packet transmission but the same number of total data bits as the conventional serial packet transmission, an improved throughput indicated by the dashed line marked "Nb = 128" is obtained.

It is apparent from the above that the arrangements described are applicable to the data communication industry.

The foregoing describes only some embodiments of the present invention, and modifications and/or changes can be made thereto without departing from the scope of the invention, the embodiments being illustrative and not restrictive.

## Claims

1. A modulation method comprising:
dividing a series of data bits into a plurality of contiguous blocks;
composing each said block into a corresponding parallel packet;
mapping one or more bits from each said parallel packet into a corresponding data symbol; and
modulating said data symbols onto respective subcarriers of an OFDM symbol, such that data symbols from the same packet are modulated onto the same subcarrier.

2. The method of claim 1, further comprising transmitting said OFDM symbol.

3. The method of claim 1, further comprising repeating said mapping and modulating until all said bits in said series have been mapped.

4. The method of claim 1, further comprising:
receiving channel state information for each of said subcarriers from a destination of said series of data bits;
wherein said mapping is dependent on said received channel state information for the corresponding said subcarrier.

5. The method of claim 2, further comprising:
receiving acknowledgement information for each said parallel packet from a destination of said series of data bits; and
re-transmitting the block composed into a parallel packet that said received acknowledgement information indicated was erroneously received.

6. The method of claim 1, further comprising:
dividing a further series of data bits into a plurality of contiguous blocks;
composing each said block into a corresponding parallel packet;
mapping one or more bits from each said parallel packet into a corresponding data symbol; and
modulating said data symbols onto further respective subcarriers of said OFDM symbol, such that data symbols from the same packet are modulated onto the same subcarrier.

7. The method of claim 1, further comprising:
dividing said series of data bits into a further plurality of contiguous blocks;
composing each said further block into a corresponding parallel packet;
mapping one or more bits from each said parallel packet into a corresponding data symbol;
modulating said data symbols onto respective subcarriers of a further OFDM symbol, such that data symbols from the same packet are modulated onto the same subcarrier.

8. The method of claim 7, further comprising space precoding said OFDM symbol and said further OFDM symbol for transmission on one or more transmit antennas.

9. The method of claim 1, further comprising:
mapping one or more further bits from each said parallel packet into a further corresponding data symbol; and
modulating said further data symbols onto respective subcarriers of a further OFDM symbol, such that data symbols from the same packet are modulated onto the same subcarrier.

10. A modulation device comprising:
a packet composing module (410) adapted to:
divide a series of data bits into a plurality of contiguous blocks; and
compose each said block into a corresponding parallel packet;
a data symbol mapping module (420-1,...420-N) adapted to map one or more bits from each said parallel packet into a corresponding data symbol; and
a modulation module (430) adapted to modulate said data symbols onto respective subcarriers of an OFDM symbol, such that data symbols from the same packet are modulated onto the same subcarrier.

11. A communication system comprising:
a packet composing module (410) adapted to:
divide a series of data bits into a plurality of contiguous blocks; and
compose each said block into a corresponding parallel packet;
a data symbol mapping module (420-1,...420-N) adapted to map one or more bits from each said parallel packet into a corresponding data symbol;
a modulation module (430) adapted to modulate said data symbols onto respective subcarriers of an OFDM symbol, such that data symbols from the same packet are modulated onto the same subcarrier;
a demodulation module (710) adapted to demodulate a first predetermined number of said OFDM symbols to form a second predetermined number of parallel symbol streams, each said symbol stream comprising the first predetermined number of symbols;
a de-mapping module (720-1,...720-N) adapted to de-map each said parallel symbol stream to a corresponding packet; and
a decomposing module (730) adapted to decompose each said packet into a contiguous block of a series of data bits.

## Patentansprüche

1. Modulationsverfahren, das Folgendes beinhaltet:
Unterteilen einer Serie von Datenbits in mehrere zusammenhängende Blöcke;
Zusammensetzen jedes genannten Blocks zu einem entsprechenden parallelen Paket;
Mappen eines oder mehrerer Bits aus jedem genannten parallelen Paket in ein entsprechendes Datensymbol; und
Modulieren der genannten Datensymbole auf jeweilige Subträger eines OFDM-Symbols, so dass Datensymbole aus demselben Paket auf denselben Subträger moduliert werden.

2. Verfahren nach Anspruch 1, das ferner das Senden des genannten OFDM-Symbols beinhaltet.

3. Verfahren nach Anspruch 1, das ferner das Wiederholen des genannten Mappens und Modulierens beinhaltet, bis alle genannten Bits in der genannten Serie gemappt sind.

4. Verfahren nach Anspruch 1, das ferner Folgendes beinhaltet:
Empfangen von Kanalzustandsinformationen für jeden der genannten Subträger von einem Ziel der genannten Datenbitserie;
wobei das genannte Mappen von den genannten empfangenen Kanalzustandsinformationen für den entsprechenden genannten Subträger abhängig ist.

5. Verfahren nach Anspruch 2, das ferner Folgendes beinhaltet:
Empfangen von Quittierungsinformationen für jedes genannte parallele Paket von einem Ziel der genannten Datenbitserie; und
Neusenden des zu einem parallelen Paket zusammengesetzten Blocks, bei dem die genannten empfangenen Quittierungsinformationen angezeigt haben, dass es fehlerhaft empfangen wurde.

6. Verfahren nach Anspruch 1, das ferner Folgendes beinhaltet:
Unterteilen einer weiteren Datenbitserie in mehrere zusammenhängende Blöcke;
Zusammensetzen jedes genannten Blocks zu einem entsprechenden parallelen Paket;
Mappen eines oder mehrerer Bits aus jedem genannten parallelen Paket in ein entsprechendes Datensymbol; und
Modulieren der genannten Datensymbole auf weitere jeweilige Subträger des genannten OFDM-Symbols, so dass Datensymbole aus demselben Paket auf denselben Subträger moduliert werden.

7. Verfahren nach Anspruch 1, das ferner Folgendes beinhaltet:
Unterteilen der genannten Datenbitserie in eine weitere Mehrzahl von zusammenhängenden Blöcken;
Zusammensetzen jedes genannten weiteren Blocks zu einem entsprechenden parallelen Paket;
Mappen einer oder mehrerer Bits aus jedem genannten parallelen Paket in ein entsprechendes Datensymbol;
Modulieren der genannten Datensymbole auf jeweilige Subträger eines weiteren OFDM-Symbols, so dass Datensymbole aus demselben Paket auf denselben Subträger moduliert werden.

8. Verfahren nach Anspruch 7, das ferner das räumliche Vorcodieren des genannten OFDM-Symbols und des genannten weiteren OFDM-Symbols zum Senden an einer oder mehreren Sendeantennen beinhaltet.

9. Verfahren nach Anspruch 1, das ferner Folgendes beinhaltet:
Mappen eines oder mehrerer weiterer Bits aus jedem genannten parallelen Paket in ein weiteres entsprechendes Datensymbol; und
Modulieren der genannten weiteren Datensymbole auf jeweilige Subträger eines weiteren OFDM-Symbols, so dass Datensymbole aus demselben Paket auf denselben Subträger moduliert werden.

10. Modulationsvorrichtung, die Folgendes umfasst:
ein Paketzusammensetzungsmodul (410), das ausgelegt ist zum:
Unterteilen einer Serie von Datenbits in mehrere zusammenhängende Blöcke; und
Zusammensetzen jedes genannten Blocks zu einem entsprechenden parallelen Paket;
ein Datensymbol-Mappingmodul (420-1,...420-N) zum Mappen eines oder mehrerer Bits aus jedem genannten parallelen Paket in ein entsprechendes Datensymbol; und
ein Modulationsmodul (430) zum Modulieren der genannten Datensymbole auf jeweilige Subträger eines OFDM-Symbols, so dass Datensymbole aus demselben Paket auf denselben Subträger moduliert werden.

11. Kommunikationssystem, das Folgendes umfasst:
ein Paketzusammensetzungsmodul (410) das ausgelegt ist zum:
Unterteilen einer Serie von Datenbits in mehrere zusammenhängende Blöcke; und
Zusammensetzen jedes genannten Blocks zu einem entsprechenden parallelen Paket;
ein Datensymbol-Mappingmodul (420-1,...420-N) zum Mappen eines oder mehrerer Bits aus jedem genannten parallelen Paket in ein entsprechendes Datensymbol;
ein Modulationsmodul (430) zum Modulieren der genannten Datensymbole auf jeweilige Subträger eines OFDM-Symbols, so dass Datensymbole aus demselben Paket auf denselben Subträger moduliert werden;
ein Demodulationsmodul (710) zum Demodulieren einer ersten vorbestimmten Anzahl der genannten OFDM-Symbole zum Bilden einer zweiten vorbestimmten Anzahl von parallelen Symbolströmen, wobei jeder genannte Symbolstrom die erste vorbestimmte Anzahl von Symbolen umfasst;
und ein Demapping-Modul (720-1,...720-N) zum Demappen jedes genannten parallelen Symbolstroms zu einem entsprechenden Paket; und
ein Zerlegungsmodul (730) zum Zerlegen jedes genannten Pakets in einen zusammenhängenden Block aus einer Serie von Datenbits.

## Revendications

1. Procédé de modulation, comprenant :
la division d'une série de bits de données en une pluralité de blocs contigus ;
la constitution de chacun desdits blocs en un paquet parallèle correspondant ;
le mappage d'un ou plusieurs bits de chacun desdits paquets parallèles dans un symbole de données correspondant ; et
la modulation desdits symboles de données sur des sous-porteuses respectives d'un symbole OFDM de telle façon que des symboles de données du même paquet sont modulés sur la même sous-porteuse.

2. Procédé selon la revendication 1, comprenant en outre la transmission dudit symbole OFDM.

3. Procédé selon la revendication 1, comprenant en outre la répétition dudit mappage et de ladite modulation jusqu'à ce que la totalité desdits bits de ladite série aient été mappés.

4. Procédé selon la revendication 1, comprenant en outre :
la réception pour chacune desdites sous-porteuses d'une information d'état de canal venant d'une destination de ladite série de bits de données ;
dans lequel ledit mappage dépend de ladite information d'état de canal reçue pour ladite sous-porteuse correspondante.

5. Procédé selon la revendication 2, comprenant en outre :
la réception pour chacun desdits paquets parallèles d'une information d'accusé de réception venant d'une destination de ladite série de bits de données ; et
la retransmission du bloc constitué dans un paquet parallèle dont ladite information d'accusé de réception reçue indiquait qu'il a été reçu par erreur.

6. Procédé selon la revendication 1, comprenant en outre :
la division d'une autre série de bits de données en une pluralité de blocs contigus ;
la constitution de chacun desdits blocs en un paquet parallèle correspondant ;
le mappage d'un ou plusieurs bits de chacun desdits paquets parallèles dans un symbole de données correspondant ; et
la modulation desdits symboles de données sur d'autres sous-porteuses respectives dudit symbole OFDM de telle façon que des symboles de données du même paquet sont modulés sur la même sous-porteuse.

7. Procédé selon la revendication 1, comprenant en outre :
la division de ladite série de bits de données en une autre pluralité de blocs contigus ;
la constitution de chacun desdits autres blocs en un paquet parallèle correspondant ;
le mappage d'un ou plusieurs bits de chacun desdits paquets parallèles dans un symbole de données correspondant ;
la modulation desdits symboles de données sur des sous-porteuses respectives d'un autre symbole OFDM de telle façon que des symboles de données du même paquet sont modulés sur la même sous-porteuse.

8. Procédé selon la revendication 7, comprenant en outre le précodage spatial dudit symbole OFDM et dudit autre symbole OFDM en vue de la transmission sur une ou plusieurs antennes émettrices.

9. Procédé selon la revendication 1, comprenant en outre :
le mappage d'un ou plusieurs autres bits de chacun desdits paquets parallèles dans un autre symbole de données correspondant ; et
la modulation desdits autres symboles de données sur des sous-porteuses respectives d'un autre symbole OFDM de telle façon que des symboles de données du même paquet sont modulés sur la même sous-porteuse.

10. Dispositif de modulation, comprenant :
un module de constitution de paquets (410) adapté pour :
diviser une série de bits de données en une pluralité de blocs contigus ; et
constituer chacun desdits blocs en un paquet parallèle correspondant ;
un module de mappage de symboles de données (420-1, ... 420-N) adapté pour mapper un ou plusieurs bits de chacun desdits paquets parallèles dans un symbole de données correspondant ; et
un module de modulation (430) adapté pour moduler lesdits symboles de données sur des sous-porteuses respectives d'un symbole OFDM de telle façon que des symboles de données du même paquet sont modulés sur la même sous-porteuse.

11. Système de communication, comprenant :
un module de constitution de paquets (410) adapté pour :
diviser une série de bits de données en une pluralité de blocs contigus ; et
constituer chacun desdits blocs en un paquet parallèle correspondant ;
un module de mappage de symboles de données (420-1, ... 420-N) adapté pour mapper un ou plusieurs bits de chacun desdits paquets parallèles dans un symbole de données correspondant ;
un module de modulation (430) adapté pour moduler lesdits symboles de données sur des sous-porteuses respectives d'un symbole OFDM de telle façon que des symboles de données du même paquet sont modulés sur la même sous-porteuse ;
un module de démodulation (710) adapté pour démoduler un premier nombre prédéterminé desdits symboles OFDM afin de former un second nombre prédéterminé de chaînes de symboles parallèles, chacune desdites chaînes de symboles comprenant le premier nombre prédéterminé de symboles ;
un module de démappage (720-1, ... 720-N) adapté pour démapper chacune desdites chaînes de symboles parallèles dans un paquet correspondant ; et
un module de déconstitution (730) adapté pour déconstituer chacun desdits paquet en un bloc contigu d'une série de bits de données.
